# FASCICULE DE BREVET EUROPEEN

(11) **EP 0 888 807 B1**
(45) Date de publication et mention de la délivrance du brevet: **03.04.2002**
(21) Numéro de dépôt: 98401549.5
(22) Date de dépôt: 24.06.1998
(51) Int. Cl.: B01D 53/86, B01J 23/889, B01J 8/04

(54) **Procédé de traitement de flux gazeux**
Verfahren zur Behandlung von Gasströmen
Process for the treatment of gas streams

(30) Priorité: 04.07.1997 FR 9708499
(43) Date de publication de la demande: 07.01.1999
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: Gary, Daniel, 78180 Montigny le Bretonneux (FR)
(74) Mandataire: Le Moenner, Gabriel

(56) Documents cités:
- EP-A- 0 308 789
- EP-A- 0 438 282
- EP-A- 0 799 633
- FR-A- 2 690 357
- US-A- 4 045 538
- PATENT ABSTRACTS OF JAPAN vol. 018, no. 435 (M-1655), 15 août 1994 & JP 06 129763 A (DAIDO HOXAN INC), 13 mai 1994 & DATABASE WPI Section Ch, Week 9424 Derwent Publications Ltd., London, GB; Class E36, AN 94194131 A
- PATENT ABSTRACTS OF JAPAN vol. 018, no. 239 (M-1601), 9 mai 1994 & JP 06 026760 A (HOXAN CORP), 4 février 1994 & DATABASE WPI Section Ch, Week 9411 Derwent Publications Ltd., London, GB; Class E36, AN 94086129 A

## Description

La présente invention se rapporte à un procédé de purification de flux gazeux, en particulier d'air ambiant, en les impuretés susceptibles de s'y trouver, lesdites impuretés étant susceptibles de subir une oxydation et/ou une réduction catalytique.

Les gaz de haute pureté, tels les gaz inertes, trouvent des applications dans des secteurs nombreux et variés de l'industrie. Ainsi, l'azote de haute pureté ou encore appelé azote ultra pur est un fluide de plus en plus utilisé dans l'industrie électronique et ce, à l'état liquide ou gazeux.

En général, l'azote ultra pur destiné aux fins électroniques doit être épuré, c'est-à-dire débarrassé des impuretés ou polluants susceptibles de s'y trouver, tels les impuretés de type: oxygène (O₂), monoxyde de carbone (CO), dioxyde de carbone (CO₂), hydrogène (H₂), eau (H₂O), hydrocarbures, composés halogénés...

Il existe plusieurs procédés de production d'azote ultra pur, dont le plus commun est celui combinant catalyse oxydative et distillation cryogénique de l'air atmosphérique. Selon ce procédé, l'air atmosphérique est d'abord comprimé, puis réchauffé généralement à une température supérieure à 120°C au moyen, par exemple, d'échangeurs thermiques, tels des réchauffeurs, avant d'être soumis à une catalyse oxydative, de sorte d'oxyder l'hydrogène (H₂) et le monoxyde de carbone (CO) qui s'y trouvent en eau (H₂O) et dioxyde de carbone (CO₂) respectivement; la vapeur d'eau et le dioxyde de carbone initialement présents dans l'air et ceux formés par catalyse oxydative étant subséquemment éliminés par adsorption, par exemple sur un lit d'alumine activée ou de zéolite.

En effet, il est indispensable d'éliminer au préalable les impuretés de type CO et H₂ présentes dans l'air, c'est-à-dire avant distillation cryogénique car, par distillation, ces impuretés sont difficilement séparables et engendrent des coûts supplémentaires importants.

En outre, il est indispensable d'éliminer la vapeur d'eau et le CO₂ se trouvant dans l'air, avant de procéder à une distillation cryogénique dudit air, afin d'éliminer tout risque de bouchage ou de colmatage des colonnes de distillation cryogénique par ces deux impuretés insolubles à température cryogénique.

Ce prétraitement ou purification de l'air avant distillation est appelé "épuration en-tête" car situé en amont des colonnes de distillation cryogénique.

L'air ainsi épuré par catalyse et adsorption est subséquemment envoyé vers une colonne de distillation cryogénique, en sortie de laquelle on récupère, d'une part, de l'oxygène et, d'autre part, de l'azote.

L'azote ainsi produit peut, si nécessaire, subir d'autres étapes d'épuration afin d'en éliminer toutes les impuretés résiduelles qui s'y trouvent et d'atteindre ainsi les spécifications requises par l'industrie électronique, à savoir moins de quelques ppb (partie par milliard en volume) d'impuretés.

Ainsi, on peut citer le document EP-A-799633 (publié le 08.10.1997) qui enseigne un procédé de purification d'air, notamment en ses impuretés H₂ et CO, dans lequel l'air est mis en contact avec plusieurs lits de purification successifs, notamment du gel de silice, des zéolites 13X et 5A, de l'hopcalite (mélange d'oxydes de cuivre et manganèse), de l'oxyde d'aluminium.

Par ailleurs, le document EP-A-438282 décrit la purification d'air par adsorption d'eau sur alumine activée, gel de silice ou zéolite, par catalyse des impuretés H₂ et CO sur un catalyseur du type hopcalite ou du type palladium sur support, et par élimination de l'eau ainsi formée.

Classiquement, une installation susceptibles de mettre en oeuvre un tel procédé de production d'azote se compose successivement:
- d'un compresseur d'air permettant de comprimer de l'air atmosphérique,
- éventuellement un ou plusieurs échangeurs de chaleur destinés à porter l'air à une température compatible avec le fonctionnement du ou des catalyseurs, c'est-à-dire, en général, de l'ordre de 80 à 150°C,
- une zone d'épuration catalytique comprenant un ou plusieurs réacteurs d'oxydation catalytique, contenant un ou plusieurs lits de catalyseurs opérant à haute température,
- un ou plusieurs échangeurs thermiques destinés à refroidir l'air, après passage dans la zone d'épuration catalytique, jusqu'à la température ambiante par exemple,
- une zone de dessiccation/décarbonatation destinée à éliminer les impuretés de type CO₂ et H₂O de l'air avant distillation cryogénique,
- une boite froide comprenant notamment des échangeurs thermiques permettant de porter l'air à une température cryogénique et une colonne de distillation cryogénique destinée à séparer l'air en ses constituants azote et oxygène,
- et des moyens de récupération notamment de l'azote ainsi produit.

En général, la zone d'épuration catalytique, opérant à haute température, permet une oxydation efficace du CO et de H₂ se trouvant dans l'air en CO₂ et H₂O respectivement.

Toutefois, l'efficacité intrinsèque du catalyseur mis en oeuvre dans cette zone catalytique est intimement liée à la nature, c'est-à-dire à la composition, de l'air atmosphérique du site où doit être effectuée la distillation cryogénique et donc la production d'azote.

En effet, si sur un site standard, la durée de vie d'un catalyseur peut être de quelques années, il n'en va pas de même sur un site fortement pollué, telle une zone à forte densité d'industrie chimique ou pétrolière, par exemple.

Ainsi, on a pu noter sur certains sites industriels à forte activité, une désactivation très rapide du catalyseur d'oxydation après seulement quelques mois de fonctionnement, conduisant à une chute d'activité de près de 50% dudit catalyseur et donc à un remplacement précoce de celui-ci.

Après une analyse de l'air atmosphérique, on a constaté que celui-ci renfermait de fortes proportions de polluants agissant comme des "poisons" pour le catalyseur d'oxydation et engendrant une désactivation précoce de celui-ci, d'autant plus rapide que la teneur de l'air en lesdits poisons est élevée.

En outre, lorsque, après un temps d'épuration de durée variable, ces poisons traversent le poste catalytique, ils peuvent engendrer une dégradation précoce des performances du poste d'épuration en-tête. situé en aval, c'est-à-dire, par exemple du lit de zéolite utilisée à cette fin.

De tels "poisons" sont notamment les éléments halogénés, tels le chlore, le fluor, le brome..., les gaz acides, tels le SO₂ et les NOₓ, et les vapeurs huileuses susceptibles d'être relarguées par le compresseur d'air lorsque ce compresseur est de type lubrifié.

Le but de la présente invention est donc d'améliorer les procédés et dispositifs de purification de flux gazeux, tel l'air, en résolvant le problème de désactivation précoce où d'empoisonnement rapide des catalyseurs d'oxydation ou de réduction utilisés pour la purification dudit flux gazeux.

L'invention concerne alors un procédé de purification d'un flux gazeux, en l'une au moins des impuretés susceptibles de subir une oxydation et/ou une réduction catalytique qu'il contient, tels CO, H₂ et O₂, et contenant, en outre, des impuretés choisies parmi les poisons halogénés, SO₂, NOₓ et les vapeurs d'huile, dans lequel on soumet ledit flux gazeux à au moins les étapes suivantes :
(a) compression du flux gazeux à une pression supérieure à la pression atmosphérique,
(b) mise en contact du flux gazeux comprimé avec au moins un premier lit de particules d'un matériau contenant au moins un peroxyde métallique pour éliminer des impuretés choisies parmi les poisons halogénés, SO₂, NOₓ et les vapeurs d'huile, et
(c) mise en contact du flux gazeux issu de l'étape (b) avec au moins un second lit d'au moins un catalyseur, tel un catalyseur d'oxydation et/ou un catalyseur de réduction.

Selon le cas, ledit procédé peut comprendre l'une ou plusieurs des caractéristiques suivantes:
- le premier lit de particules contient, en outre, au moins un oxyde métallique.
- les particules du premier lit comprennent au moins 15 % en poids de peroxyde métallique et, de préférence, au moins 25 % en poids de peroxyde métallique;
- les particules du premier lit comprennent des oxydes métalliques d'au moins deux métaux choisis parmi les métaux de transition, à savoir notamment, Ag, Cu, Mn, et Au;
- les particules du premier lit sont constituées au moins d'un mélange comprenant un oxyde de cuivre, un oxyde de manganèse et un peroxyde de manganèse;
- au moins l'étape (b) est réalisée sur un flux gazeux non déssiccé, à une température supérieure ou égale à 80°C et, de préférence, supérieure ou égale à 120°C, voire supérieure ou égale à 150°C;
- au moins l'étape (b) est réalisée sur un flux gazeux préalablement déssiccé, à une température supérieure ou égale à 20°C et, de préférence, supérieure ou égale à 50°C;
- à l'étape (a), on comprime le flux gazeux à une pression de 3.10⁵ Pa à 3.10⁶ Pa, de préférence, à une pression de 3.10⁵ Pa à 10⁶ Pa;
- les étapes (b) et (c) sont réalisées successivement et dans un même réacteur;
- il comporte, après l'étape (c), une étape d'élimination des impuretés oxydées et/ou réduites contenues dans le flux gazeux;
- il comporte, le cas échéant, après l'étape (c), une étape de distillation cryogénique du flux gazeux;
- il comporte, en outre, une étape de modification de la température du flux gazeux par chauffage ou par refroidissement;
- le flux gazeux est de l'air;
- le flux gazeux est un gaz inerte à recycler, tel l'azote, l'argon, l'hélium ou leurs mélanges;
- il comporte, en outre, une étape de récupération d'au moins un produit choisi parmi l'azote, l'oxygène, l'argon et l'hélium.

L'invention va être maintenant décrite plus en détail à l'aide d'un mode de réalisation présenté sur la figure unique annexée, donné à titre illustratif, mais nullement limitatif.

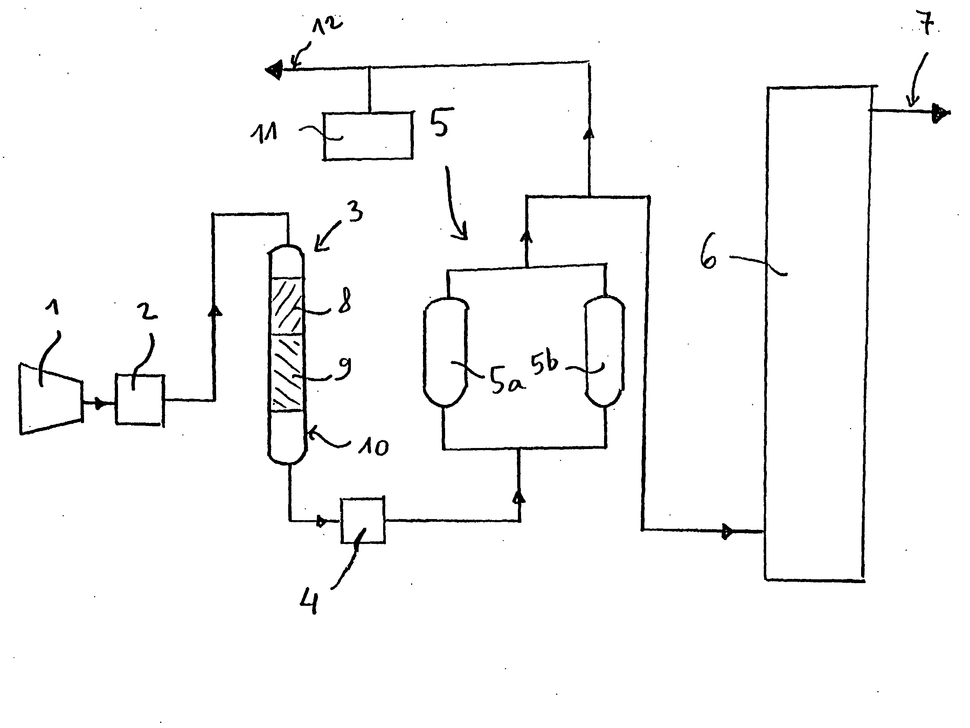

La figure 1 représente une installation de production d'azote à partir d'air atmosphérique.

Un flux d'air atmosphérique contenant des impuretés de type CO, H₂, CO₂, CH₄, H₂O, SO₂, des composés halogénés et des NO_{X} est comprimé au moyen d'un compresseur 1, porté à une température de l'ordre de 160°C par passage dans des échangeurs de chaleur 2, avant d'être envoyé à une zone de traitement catalytique 3, comprenant une bouteille 10 au sein de laquelle sont insérés un premier lit 8 et un second lit 9 de particules; le premier lit 8 étant situé du côté de l'entrée et le second lit 9 du côté de la sortie de la bouteille 10.

Dans cette zone de traitement catalytique 3, l'air a une température de l'ordre de 160°C et a une pression d'environ 7.10⁵ Pa, passe donc successivement à travers le premier lit 8, puis à travers le second lit 9 de particules.

Plus précisément, le premier lit 8 est un lit de garde c'est-à-dire de prétraitement, comportant un matériau constitué à environ 75% d'un mélange d'oxydes de cuivre et de manganèse et à 25% en poids de peroxyde de manganèse. Un tel matériau est notamment commercialisé par la Société SÜD CHEMIE sous la référence N-140.

Le premier lit 8 a donc pour effet de protéger le lit catalytique subséquent en permettant une élimination des espèces halogénées, des gaz acides, des vapeurs d'hydrocarbures et analogues susceptibles de se trouver dans le flux gazeux à épurer.

Le second lit 9 est, quant à lui, constitué de particules de catalyseurs constitués de métal, ici du palladium, déposé sur un support par exemple de type alumine.

Le premier lit 8 étant placé en amont du second lit 9, l'air à épurer contenant, en outre, des poisons pour le catalyseur va subir un prétraitement lors de son passage à travers le premier lit 8, de sorte que les poisons, tels les halogénés, le SO₂, les NO_{X}, et les vapeurs d'huile émanant du compresseur 1, sont retenus par ledit premier lit 8.

En d'autres termes, le premier lit 8 sert de protection au second lit 9 de catalyseur situé en aval, de sorte que ce dernier puisse assumer pleinement son rôle et oxyder les espèces oxydables contenues dans l'air, tels le CO et l'hydrogène, pendant une période de temps beaucoup plus longue que lorsque l'on ne soumet pas l'air à un tel pré-traitement.

Après traitement catalytique, l'air est successivement envoyé vers un ou plusieurs échangeurs de chaleur 4, de sorte de porter ledit air à une température inférieure à 50°C, voire inférieure à 0°C, puis est envoyé vers une zone d'épuration 5 où sont éliminés le dioxyde de carbone (CO₂) et l'eau (H₂O) qui ont été formés par oxydation des espèces oxydables durant le traitement catalytique.

De préférence, la zone d'épuration 5 comprend deux bouteilles 5a et 5b, tels des adsorbeurs, remplis d'un matériau permettant l'élimination des impuretés précitées, par exemple une zéolite, de l'alumine activée ou du charbon actif.

Avantageusement, les deux bouteilles 5a et 5b fonctionnent en alternance, c'est-à-dire que pendant que la bouteille 5a est en phase d'adsorption, la bouteille 5b est en phase de régénération, et inversement.

Après épuration, l'air est envoyé vers une boite froide 6 comportant des échangeurs thermiques et une ou plusieurs colonnes de distillation cryogénique (non détaillé).

Lorsque le fluide à purifier n'est pas de l'air, mais par exemple un gaz inerte pollué devant être recyclé, tel de l'azote, de l'hélium ou de l'argon impurs, celui-ci n'est pas obligatoirement -envoyé, après épuration, vers la boîte froide 7, mais peut être acheminé directement vers un site utilisateur 12 (non détaillé) et/ou vers un site de stockage 11.

En sortie de boite froide, on récupère via des moyens de récupération 7, l'azote issu de la distillation cryogénique, lequel pourra être utilisé tel quel ou, le cas échéant, subir d'autres étapes de purification.

Le fait de prévoir un lit d'un matériau constitué d'un mélange d'oxydes et de peroxydes métalliques en amont du lit de catalyseur permet, d'une part, d'augmenter notablement la durée de vie du catalyseur en lui fournissant une protection contre les poisons contenus dans l'air à épurer par piégeage et/ou réaction(s) chimique(s) et, d'autre part, présente l'avantage de ne nécessiter aucune régénération de ladite zone de traitement catalytique 9.

## Revendications

1. Procédé de purification d'un flux gazeux contenant des impuretés choisies parmi les poisons halogénés, SO₂, NOₓ et les vapeurs d'huile, en l'une au moins des impuretés qu'il contient, dans lequel on soumet ledit flux gazeux à au moins les étapes suivantes:
(a) compression du flux gazeux à une pression supérieure à la pression atmosphérique,
(b) mise en contact du flux gazeux comprimé avec au moins un premier lit de particules d'un matériau contenant au moins un peroxyde métallique pour éliminer des impuretés choisies parmi les poisons halogénés, SO₂, NOₓ et les des vapeurs d'huile, et
(c) mise en contact du flux gazeux issu de l'étape (b) avec au moins un second lit d'au moins un catalyseur.

2. Procédé selon la revendication 1, **caractérisé en ce que** le premier lit de particules contient, en outre, au moins un oxyde métallique.

3. Procédé selon l'une des revendications 1 ou 2, **caractérisé en ce que** les particules du premier lit comprennent au moins 15 % en poids de peroxyde métallique et, de préférence, au moins 25 % en poids de peroxyde métallique.

4. Procédé selon l'une des revendications 1 à 3, **caractérisé** en ce les particules du premier lit comprennent des oxydes métalliques d'au moins deux métaux choisi parmi les métaux de transition.

5. Procédé selon l'une des revendications 1 à 4, **caractérisé en ce que** les particules du premier lit sont constituées au moins d'un mélange comprenant un oxyde de cuivre, un oxyde de manganèse et un peroxyde de manganèse.

6. Procédé selon l'une des revendications 1 à 5, **caractérisé en ce qu'**au moins l'étape (b) est réalisée à une température supérieure ou égale à 80°C et, de préférence, supérieure ou égale à 150°C.

7. Procédé selon l'une des revendications 1 à 5, **caractérisé en ce qu'**au moins l'étape (b) est réalisée sur un flux gazeux préalablement déssiccé, à une température supérieure ou égale à 20°C et, de préférence, supérieure ou égale à 50°C.

8. Procédé selon l'une des revendications 1 à 7, **caractérisé en ce qu'**à l'étape (a), on comprime le flux gazeux à une pression de 3.10⁵ Pa à 3.10⁶ Pa, de préférence, à une pression de 3.10⁵ Pa à 10⁶ Pa.

9. Procédé selon l'une des revendications 1 à 8, **caractérisé en ce que** les étapes (b) et (c) sont réalisées successivement et dans un même réacteur.

10. Procédé selon l'une des revendications 1 à 9, **caractérisé en ce qu'**il comporte, après l'étape (c), une étape d'élimination des impuretés oxydées ou réduites contenues dans le flux gazeux.

11. Procédé selon l'une des revendications 1 à 10, **caractérisé en ce qu'**il comporte, en outre, après l'étape (c), une étape de distillation cryogénique du flux gazeux.

12. Procédé selon l'une des revendications 1 à 11, **caractérisé en ce qu'**il comporte, en outre, une étape de modification de la température du flux gazeux par chauffage ou par refroidissement.

13. Procédé selon l'une des revendications 1 à 12, **caractérisé en ce que** le flux gazeux est de l'air ou un flux gazeux choisi parmi l'azote, l'hélium, l'argon et leurs mélanges.

14. Procédé selon l'une des revendications 1 à 13, **caractérisé en ce qu'**il comporte, en outre, une étape de récupération d'au moins un produit choisi parmi l'azote, l'hélium, l'oxygène et l'argon.

15. Procédé selon l'une des revendications 1 à 14, **caractérisé en ce que** le flux à purifier est de l'air contenant des espèces oxydables, lesdites espèces oxydables étant oxydées sur le second lit de catalyseur.

16. Procédé selon l'une des revendications 1 à 15, **caractérisé en ce que** le flux à purifier contient du CO et de l'hydrogène en tant qu'espèces oxydables.

17. Procédé selon l'une des revendications 1 à 16, **caractérisé en ce que** le flux à purifier contient, en outre, du CH₄ en tant qu'espèce oxydable.

## Patentansprüche

1. Verfahren zur Reinigung eines Gasstroms, der unter Halogengiften, SO₂, NOₓ und Öldämpfen ausgewählte Verunreinigungen enthält, in bezug auf mindestens eine der darin enthaltenen Verunreinigungen, bei dem man den Gasstrom mindestens den folgenden Schritten unterwirft:
(a) Verdichten des Gasstroms auf einen über Normaldruck liegenden Druck,
(b) Inberührungbringen des verdichteten Gasstroms mit mindestens einer ersten Schüttung von Teilchen aus einem Material, das mindestens ein Metallperoxid enthält, zur Abtrennung von unter Halogengiften, SO₂, NOₓ und Öldämpfen ausgewählten Verunreinigungen und
(c) Inkontaktbringen des Gasstroms aus Stufe (b) mit mindestens einer zweiten Schüttung mindestens eines Katalysators.

2. Verfahren nach Anspruch 1, **dadurch gekennzeichnet, daß** die erste Schüttung von Teilchen außerdem auch noch mindestens ein Metalloxid enthält.

3. Verfahren nach Anspruch 1 oder 2, **dadurch gekennzeichnet, daß** die Teilchen der ersten Schüttung mindestens 15 Gew.-% Metallperoxid und vorzugsweise mindestens 25 Gew.-% Metallperoxid enthalten.

4. Verfahren nach einem der Ansprüche 1 bis 3, **dadurch gekennzeichnet, daß** die Teilchen der ersten Schüttung Metalloxide von mindestens zwei unter den Übergangsmetallen ausgewählten Metallen enthalten.

5. Verfahren nach einem der Ansprüche 1 bis 4, **dadurch gekennzeichnet, daß** die Teilchen der ersten Schüttung aus mindestens einer ein Kupferoxid, ein Manganoxid und ein Manganperoxid enthaltenden Mischung bestehen.

6. Verfahren nach einem der Ansprüche 1 bis 5, **dadurch gekennzeichnet, daß** man zumindest Schritt (b) bei einer Temperatur größer gleich 80°C und vorzugsweise größer gleich 150°C durchführt.

7. Verfahren nach einem der Ansprüche 1 bis 5, **dadurch gekennzeichnet, daß** man zumindest Schritt (b) mit einem vorgetrockneten Gasstrom bei einer Temperatur größer gleich 20°C und vorzugsweise größer gleich 50°C durchführt.

8. Verfahren nach einem der Ansprüche 1 bis 7, **dadurch gekennzeichnet, daß** man in Schritt (a) den Luftstrom auf einen Druck von 3.10⁵ Pa bis 3.10⁶ Pa und vorzugsweise auf einen Druck von 3.10⁵ Pa bis 10⁶ Pa verdichtet.

9. Verfahren nach einem der Ansprüche 1 bis 8, **dadurch gekennzeichnet, daß** man die Schritte (b) und (c) nacheiander und im gleichen Reaktor durchführt.

10. Verfahren nach einem der Ansprüche 1 bis 9, **dadurch gekennzeichnet, daß** man nach Schritt (c) in dem Gasstrom enthaltene oxidierte oder reduzierte Verunreinigungen abtrennt.

11. Verfahren nach einem der Ansprüche 1 bis 10, **dadurch gekennzeichnet, daß** man außerdem auch noch nach Schritt (c) den Gasstrom einer Tieftemperaturdestillation unterwirft.

12. Verfahren nach einem der Ansprüche 1 bis 11, bei dem man außerdem auch noch die Temperatur des Gasstroms durch Anwärmen oder Abkühlen verändert.

13. Verfahren nach einem der Ansprüche 1 bis 12, **dadurch gekennzeichnet, daß** man als Gasstrom Luft oder einen unter Stickstoff, Helium, Argon und Gemischen davon ausgewählten Gasstrom einsetzt.

14. Verfahren nach einem der Ansprüche 1 bis 13, **dadurch gekennzeichnet, daß** man außerdem auch noch mindestens ein unter Stickstoff, Helium, Sauerstoff und Argon ausgewähltes Produkt gewinnt.

15. Verfahren nach einem der Ansprüche 1 bis 14, **dadurch gekennzeichnet, daß** man als zu reinigenden Strom oxidierbare Spezies enthaltende Luft einsetzt, wobei die oxidierbaren Spezies an der zweiten Katalysatorschüttung oxidiert werden.

16. Verfahren nach einem der Ansprüche 1 bis 15, **dadurch gekennzeichnet, daß** der zu reinigende Strom CO und Wasserstoff als oxidierbare Spezies enthält.

17. Verfahren nach einem der Ansprüche 1 bis 16, **dadurch gekennzeichnet, daß** der zu reinigende Strom außerdem auch noch CH₄ als oxidierbare Spezies enthält.

## Claims

1. Process for purifying a gas flow containing impurities selected from halogenated poisons, SO₂, NOₓ and oil vapours, with respect to at least one of the impurities which it contains, in which the said gas flow is subjected to at least the following steps:
(a) compressing the gas flow to a pressure in excess of atmospheric pressure,
(b) bringing the compressed gas flow into contact with at least a first bed of particles of a material containing at least one metal peroxide in order to eliminate impurities selected from halogenated poisons, SO₂, NOₓ and oil vapours, and
(c) bringing the gas flow resulting from step (b) into contact with at least a second bed of at least one catalyst.

2. Process according to Claim 1, **characterized in that** the first bed of particles furthermore contains at least one metal oxide.

3. Process according to one of Claims 1 and 2, **characterized in that** the particles in the first bed comprise at least 15% by weight of metal peroxide and, preferably, at least 25% by weight of metal peroxide.

4. Process according to one of Claims 1 to 3, **characterized in that** the particles in the first bed comprise metal oxides of at least two metals selected from the transition metals.

5. Process according to one of Claims 1 to 4, **characterized in that** the particles in the first bed consist of at least one mixture comprising a copper oxide, a manganese oxide and a manganese peroxide.

6. Process according to one of Claims 1 to 5, **characterized in that** at least step (b) is carried out at a temperature greater than or equal to 80°C and, preferably, greater than or equal to 150°C.

7. Process according to one of Claims 1 to 5, **characterized in that** at least step (b) is carried out on a gas flow dried beforehand, at a temperature greater than or equal to 20°C, and preferably greater than or equal to 50°C.

8. Process according to one of Claims 1 to 7, **characterized in that**, in step (a), the gas flow is compressed to a pressure of from 3×10⁵ Pa to 3×10⁶ Pa, preferably to a pressure of from 3×10⁵ Pa to 10⁶ Pa.

9. Process according to one of Claims 1 to 8, **characterized in that** steps (b) and (c) are carried out successively and in the same reactor.

10. Process according to one of Claims 1 to 9, **characterized in that** it includes, after step (c), a step of removing oxidized or reduced impurities contained in the gas flow.

11. Process according to one of Claims 1 to 10, **characterized in that** it furthermore includes, after step (c), a step of cryogenically distilling the gas flow.

12. Process according to one of Claims 1 to 11, **characterized in that** it furthermore includes a step of modifying the temperature of the gas flow by heating or by cooling.

13. Process according to one of Claims 1 to 12, **characterized in that** the gas flow is air or a gas flow selected from nitrogen, helium, argon and mixtures thereof.

14. Process according to one of Claims 1 to 13, **characterized in that** it furthermore includes a step of recovering at least one product selected from nitrogen, helium, oxygen and argon.

15. Process according to one of Claims 1 to 14, **characterized in that** the flow to be purified is air containing oxidizable species, the said oxidizable species being oxidized over the second catalyst bed.

16. Process according to one of Claims 1 to 15, **characterized in that** the flow to be purified contains CO and hydrogen as oxidizable species.

17. Process according to one of Claims 1 to 16, **characterized in that** the flow to be purified furthermore contains CH₄ as an oxidizable species.
